(19) Europäisches Patentamt
European Patent Office
Office européen des brevets

(11) **EP 2 846 444 A1**

(12) **EUROPÄISCHE PATENTANMELDUNG**

(43) Veröffentlichungstag:
**11.03.2015 Patentblatt 2015/11**

(51) Int Cl.:
*H02K 23/36* (2006.01)     *H02K 15/09* (2006.01)

(21) Anmeldenummer: **14181955.7**

(22) Anmeldetag: **22.08.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **06.09.2013 DE 102013217820**

(71) Anmelder: **ROBERT BOSCH GMBH**
**70442 Stuttgart (DE)**

(72) Erfinder: **Raecke, Mathis**
**76275 Ettlingen (DE)**

(54) **Maschinenkomponente für eine elektrische Maschine sowie Verfahren zum Aufbau einer Maschinenkomponente**

(57)    Die Erfindung betrifft eine Maschinenkomponente (4) für eine elektrische Maschine (1), umfassend:
- einen Komponentenkörper mit Nuten (44);
- mindestens eine Wicklungsspule (42), die durch zwei der Nuten (44) verläuft; wobei die Wicklungsspule mehrere elektrisch zueinander parallel geschaltete Einzelspulen (43) aus Wicklungsdrähten aufweist, die verschiedene Wicklungsdrahtdurchmesser haben.

FIG. 1

**Beschreibung**

Technisches Gebiet

Die Erfindung betrifft elektrische Maschinen mit einer bewickelten Maschinenkomponente und insbesondere Maßnahmen zum Anpassen der elektrischen Eigenschaften einer Wicklung der Maschinenkomponente.

Stand der Technik

In der Druckschrift US Reissue 27,893 ist eine elektrische Maschine offenbart, bei der zwei Spulen geometrisch parallel in einem Ankerblechpaket angeordnet sind. Diese parallelen Spulen werden jedoch unabhängig voneinander bestromt.

In der Druckschrift DE 10 2005 035 411 A1 ist eine elektrische Maschine mit einem Rotor offenbart, auf dem eine gesehnte elektrische Wicklung mit mehreren Spulen angeordnet ist. Die Spulen sind jeweils als zwei symmetrische Teilspulen ausgebildet, die bezüglich der Drehachse des Rotors symmetrisch zueinander angeordnet sind, wobei beide Teilspulen gleichzeitig kommutierbar sind.

Beim Aufbau von elektrischen Maschinen wird deren Leistungsfähigkeit maßgeblich durch elektrische Eigenschaften von in Nuten einer Maschinenkomponente, wie z. B. eines Stators oder eines Rotors, eingebrachten Wicklungen bestimmt. Dabei bestimmen die Windungszahlen der Wicklung sowie der Leiterquerschnitt maßgeblich die Maximaldrehzahl und Leistungsfähigkeit der elektrischen Maschine.

Die Abgabeleistung von bürstenkommutierten Gleichstrommotoren, die durch die Leerlaufdrehzahl, das Anzugsmoment und dergleichen bestimmt ist, wird für verschiedenartige Anwendungen oft nur durch Veränderungen der Parameter der Wicklung im Rotor variiert, während die geometrischen Abmessungen beibehalten werden. Dies hat Vorteile für die Produktion in hohen Stückzahlen, da stets der gleiche Ankeraufbau des Rotors verwendet werden kann.

Üblicherweise werden aus Kostengründen nur Wicklungsdrähte mit standardisierten Durchmessern verwendet, so dass insbesondere das Anzugsmoment (bei ansonsten gleich bleibenden Dimensionen der übrigen Bauelemente) nur entsprechend den verfügbaren Durchmessern der Wicklungsdrähte stufenweise variierbar ist. Die Wicklung kann als so genannte Einfachwicklung oder Doppelwick-lung ausgeführt sein, wobei zur Realisierung eines bestimmten Leiterquerschnitts bei der Doppelwicklung ein Wicklungsdraht im Doppel gewickelt wird, anstatt einen entsprechend dickeren Wicklungsdraht als Einfachwicklung zu verwenden.

Es ist Aufgabe der vorliegenden Erfindung, eine Möglichkeit bereitzustellen, um die elektrischen Eigenschaften der Maschinenkomponente mit höherem Freiheitsgrad anzupassen, ohne dass von den Standarddurchmessern abweichende Durchmesser der Wicklungsdrähte benötigt werden.

Offenbarung der Erfindung

Diese Aufgabe wird durch die Maschinenkomponente für eine elektrische Maschine gemäß Anspruch 1 sowie durch das Verfahren zum Herstellen einer Maschinenkomponente gemäß dem nebengeordneten Anspruch gelöst.

Weitere Ausgestaltungen sind in den abhängigen Ansprüchen angegeben.

Gemäß einem ersten Aspekt ist eine Maschinenkomponente für eine elektrische Maschine vorgesehen, umfassend:

- einen Komponentenkörper mit Nuten; und
- mindestens eine Wicklungsspule, die durch zwei der Nuten verläuft;

wobei die Wicklungsspule mehrere elektrisch zueinander parallel geschaltete Einzelspulen aus Wicklungsdrähten aufweist, die verschiedene Wicklungsdraht-durchmesser haben.

Eine Idee der obigen Maschinenkomponente besteht darin, eine Wicklungsspule einer der Maschinenkomponenten als Doppel- oder allgemein als Mehrfachwick-lung auszuführen, wobei zwei oder mehr als zwei Einzelspulen parallel in der Maschinenkomponente angeordnet sind, wobei mindestens zwei der Wicklungs-spulen mit Wicklungsdrähten verschiedenen Wicklungsdrahtdurchmessers gewickelt sind. Die Einzelspulen sind parallel geschaltet, so dass sich ohmscher Widerstand sowie Induktivität der sich ergebenden Wicklungsspule aus den elektrischen Eigenschaften der zwei oder mehr als zwei Einzelspulen ergeben.

Insbesondere wurde festgestellt, dass die standardisierten Durchmesser von verfügbaren Wicklungsdrähten so gestuft sind, dass zwei Wicklungsdrähte mit gleichem standardisiertem Durchmesser einen wirksamen Leiterquerschnitt in Paral-lelschaltung von Einzelspulen ergeben, der der Querschnittsfläche eines dickeren Wicklungsdrahts mit ebenfalls standardisiertem Durchmesser nahezu gleich ist. Folglich ergeben sich daraus keine zusätzlichen Freiheitsgrade bei der Dimensionierung einer elektrischen Maschine, z. B. über die umsetzbaren Anzugsmomente. Durch die Verwendung von zwei oder mehr Wicklungsdrähten mit unterschiedlichen (ebenfalls standardisierten) Durchmessern können Zwischenstufen für effektive Querschnittsflächen und damit Zwischenstufen für die Anzugsmomente realisiert werden.

Weiterhin können die Windungszahlen von mindestens zwei der Einzelspulen identisch sein.

Es kann vorgesehen sein, dass die Windungen der Einzelspulen nebeneinander oder lagenweise, insbesondere in wechselnden Lagen der Windungen der Einzelspulen, in den Nuten angeordnet sind.

Weiterhin können Spulenseiten der Einzelspulen nebeneinander in den Nuten angeordnet sein.

Gemäß einem weiteren Aspekt ist eine Gleichstrommaschine mit einem Rotor als die obige Maschinenkomponente vorgesehen sein.

Weiterhin können zwei Anschlüsse jeder der Einzelspulen mit zwei Kommutatorlamellen eines Kommutators elektrisch verbunden sein, so dass die Einzelspulen über die Kommutatorlamellen parallel geschaltet sind.

Gemäß einem weiteren Aspekt ist ein Verfahren zum Herstellen einer Maschinenkomponente mit mindestens einer Wicklungsspule mit mehreren zueinander parallel geschalteten Einzelspulen vorgesehen, das die folgenden Schritte umfasst:

- Vorgeben eines Komponentenkörpers, insbesondere eines Rotorkörpers;
- Vorgeben einer effektiven Querschnittsfläche einer Wicklungsspule des Rotorkörpers; und
- Auswählen von Wicklungsdrähten mit verschiedenen Wicklungsdrahtdurchmessern aus einer Menge von Wicklungsdrähten mit verschiedenen Wicklungsdrahtdurchmessern;

wobei mindestens ein erster Wicklungsdraht mit einem ersten Wicklungsdrahtdurchmesser zum Wickeln einer ersten der Einzelspulen ausgewählt wird, wobei bei Vorsehen aller Wicklungsdrähte der Einzelspulen mit dem ersten Wicklungsdrahtdurchmesser eine erste effektive Querschnittsfläche erreicht würde, die geringer ist als die vorgegebene effektive Querschnittsfläche, wobei mindestens ein zweiter Wicklungsdraht mit einem zweiten Wicklungsdrahtdurchmesser zum Wickeln einer zweiten der Einzelspulen ausgewählt wird, wobei bei Vorsehen aller Wicklungsdrähte der Einzelspulen mit dem zweiten Wicklungsdrahtdurchmesser eine zweite effektive Querschnittsfläche erreicht würde, die größer ist als die vorgegebene effektive Querschnittsfläche.

Gemäß einer Ausführungsform kann vorgesehen sein, dass in der Menge von Wicklungsdrähten keine Wicklungsdrähte vorhanden sind, deren Wicklungsdrahtdurchmesser zwischen dem ersten und dem zweiten Wicklungsdrahtdurchmesser liegen.

Insbesondere kann durch das Auswählen von Wicklungsdrähten mit verschiedenen Wicklungsdrahtdurchmessern eine effektive Querschnittsfläche der Wicklungsspule erreicht werden, die einen Abstand von der ersten und der zweiten effektiven Querschnittsfläche von zwischen 30 und 70% des Unterschieds zwischen der ersten und der zweiten effektiven Querschnittsfläche aufweist.

Kurzbeschreibung der Zeichnungen

Ausführungsformen werden nachfolgend anhand der beigefügten Zeichnungen näher erläutert. Es zeigen:

Figur 1    eine Querschnittsansicht parallel zur axialen Richtung einer bürstenkommutierten elektrischen Maschine;

Figur 2    eine schematische Querschnittsdarstellung durch einen Rotor mit einer doppelt gewickelten Wicklungsspule mit Wicklungsdrähten mit verschiedenen Durchmessern; und

Figur 3    ein Flussdiagramm zur Veranschaulichung eines Verfahrens zum Herstellen einer Maschinenkomponente für eine elektrische Maschine.

Beschreibung von Ausführungsformen

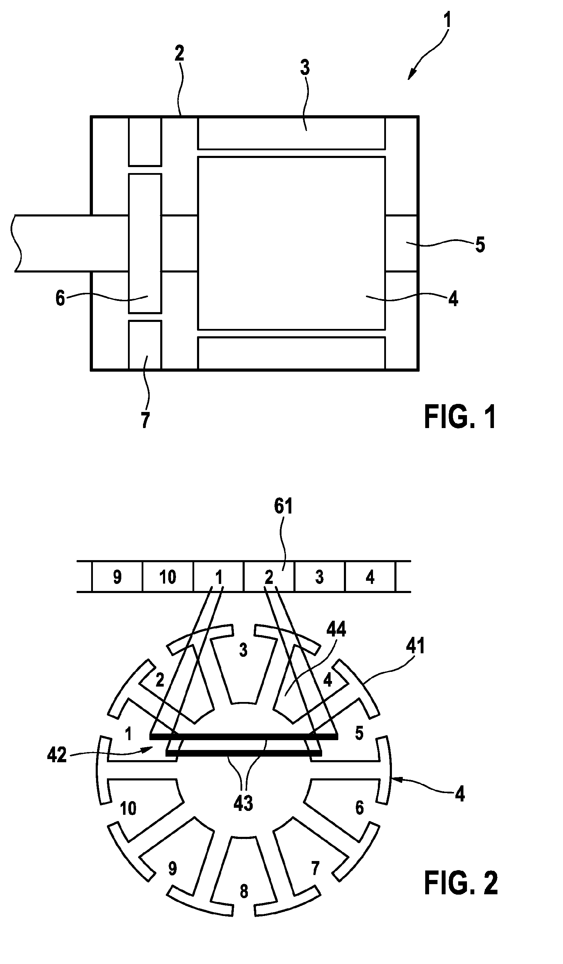

Figur 1 zeigt eine Querschnittsansicht parallel zur axialen Richtung einer bürstenkommutierten elektrischen Gleichstrommaschine 1 mit in einem Gehäuse 2 angeordneten Permanentmagneten, die einen Stator 3 bilden, und einem drehbeweglich in dem Gehäuse 2 angeordneten Rotor 4. Der Stator 3 und der Rotor 4 stellen Maschinenkomponenten der Gleichstrommaschine 1 dar.

Der Rotor 4 ist an einer Rotorwelle 5 gelagert. An der Rotorwelle 5 axial versetzt ist ein Kommutator 6 mit Kommutatorlamellen 61 vorgesehen, die über Bürsten 7 kontaktiert werden. Durch Kontaktierung der Kommutatorlamellen 61 mithilfe der Bürsten 7 können Rotorwicklungen (nicht gezeigt) in dem Rotor 4 bestromt werden. Durch eine Drehung des Rotors 4 werden die Rotorwicklungen mithilfe des Kommutators 6 geschaltet.

Die elektrischen Eigenschaften einer derartigen Gleichstrommaschine 1 werden maßgeblich durch die Geometrie des Rotors 4, die magnetischen Eigenschaften des Stators 3 sowie die elektrischen Eigenschaften der Wicklungsspulen 42 der Rotorwicklung bestimmt. Insbesondere stellen die elektrischen Eigenschaften der Induktivität und des elektrischen Widerstands Möglichkeiten dar, die Eigenschaften der Gleichstrommaschine 1 an die Anforderungen der Anwendung anzupassen, in der die Gleichstrommaschine 1 eingesetzt werden soll. Dabei können die Induktivitäten über die Windungszahlen der Wicklungsspulen 42 und deren ohmsche Widerstände über den Leiterquerschnitt der Wicklungsspulen 42 bestimmt werden.

In Figur 2 ist eine schematische Querschnittsdarstellung durch einen Rotor 4 der Gleichstrommaschine 1 der Figur 1 quer zur axialen Richtung gezeigt. Es ist eine Wicklungsspule 42 durch zwei Nuten 44 (Nut 1 und Nut 5) eines Ankers 41 des Rotors 4 dargestellt, die parallel mit zwei Kommutatorlamellen 61 elektrisch verbunden sind. Die Wicklungsspule 42 ist aus zwei Einzelspulen 43 gebildet, die elektrisch parallel zueinander geschaltet sind, so dass sich jeweils der Gesamtwiderstand aus den Parallelschaltungen der Einzelspulen 43 der Wicklungsspule 42 und die Gesamtinduktivität aus deren Windungszahlen ergeben.

Die Windungen der Einzelspulen 43 können gleichzeitig oder nacheinander oder in Lagen wechselweise in die Nuten 44 des Rotors 4 gewickelt werden. Um den durch die Parallelschaltung der beiden Einzelspulen 43 bewirkten effektiven Querschnitt der Wicklungsspulen 42 variieren zu können, ist nun vorgesehen, die Einzelspulen 43 mit verschiedenen Durchmessern der Wicklungsdrähte auszubilden. Nachfolgend wird anhand eines Zahlenbeispiels verdeutlicht, dass durch die Kombination von Wicklungsdrähten unterschiedlicher standardisierter Querschnitte der effektive Querschnitt der Wicklungsspule 42 in einer größeren Bandbreite angepasst werden kann.

Einfachwicklungen mit Drahtdurchmesser

Wicklungsspule 1:  0,45 mm entspricht einer effektiven Querschnittsfläche von 0,1590 mm$^2$
Wicklungsspule 2:  0,475 mm entspricht effektiver Querschnittsfläche von 0,1772 mm$^2$

Doppelwicklung mit identischen standardisierten Drahtdurchmessern

Einzelspulen mit jeweils 0,315 mm entsprechen einer effektiven Querschnittsfläche von 0,1558 mm$^2$

Einzelspulen mit jeweils 0,335 mm entsprechen einer effektiven Querschnittsfläche von 0,1763 mm$^2$

Doppelwicklung mit verschiedenen Drahtdurchmessern

Einzelspule 1 mit 0,315 mm und Einzelspule 2 mit 0,335 mm Durchmesser entsprechen einer effektiven Querschnittsfläche von 0,1661 mm$^2$.

Die obigen Werte betreffen Einzelspulen 43 gleicher Drahtlängen.

Man erkennt, dass durch die Verwendung von Wicklungsdrähten mit verschiedenen Drahtdurchmessern gegenüber der Einfachwicklung mit einem gewählten standardisierten Drahtdurchmesser oder gegenüber der Doppelwicklung mit zwei Einzelspulen 43 mit standardisierten gleichen Drahtdurchmessern eine effektive Querschnittsfläche erreicht werden kann, die zwischen den Leiterquerschnitten liegt, die durch die oberen Einfachwicklungen oder Doppelwicklungen mit identischen Drahtdurchmessern erreicht werden können.

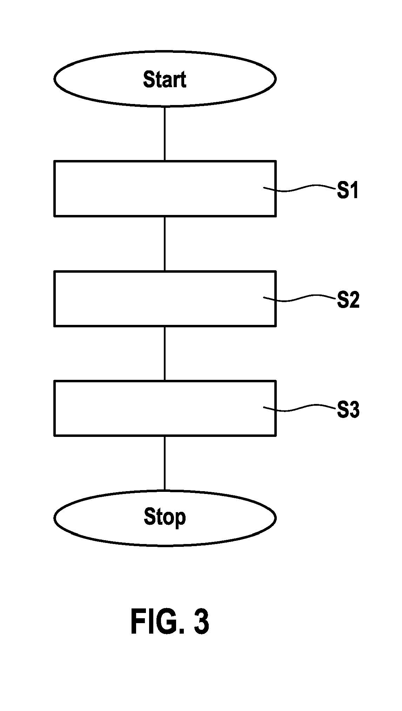

In dem Flussdiagramm der Figur 3 wird verdeutlicht, wie die Dimensionierung der Drahtdurchmesser von mehreren Einzelspulen 43 bei einem vorgegebenen gewünschten effektiven Leiterquerschnitt F der Wicklungsspule 42 berechnet wird, wenn nur bestimmte Drahtdurchmesser für die Einzelspulen 43 zur Verfügung stehen.

In Schritt S1 wird ein optimaler Drahtdurchmesser $d_{opt}$ für eine angenommene Doppelwicklung (2 Einzelwicklungen) mit gleichartigen Drahtdurchmessern (und gleichen Windungszahlen) wie folgt berechnet:

$$d_{opt} = \sqrt{\frac{F}{\pi/8}}$$

In Schritt S2 wird ausgehend von dem optimalen Drahtdurchmesser $d_{opt}$ der nächstkleinere standardisierte Wicklungsdrahtdurchmesser $d_1$ für die erste Einzelspule 43 ausgewählt.

In Schritt S3 wird der nächstgrößere standardisierte Wicklungsdrahtdurchmesser $d_2$ für die zweite Einzelspule 43 ausgewählt, so dass Wicklungsdrähte für die Einzelspulen 43 mit Wicklungsdrahtdurchmessern $d_1$, $d_2$ erhalten

werden, die eine effektive Querschnittsfläche in einer Doppelwicklung ergeben, die so nahe wie möglich an der gewünschten ist.

Dieses Verfahren lässt sich ohne Weiteres auf Mehrfachwicklungen mit mehr als zwei Einzelspulen 43 übertragen.

**Patentansprüche**

1. Maschinenkomponente (4) für eine elektrische Maschine (1), umfassend:

   - einen Komponentenkörper mit Nuten (44);
   - mindestens eine Wicklungsspule (42), die durch zwei der Nuten (44) verläuft;

   wobei die Wicklungsspule mehrere elektrisch zueinander parallel geschaltete Ein-zelspulen (43) aus Wicklungsdrähten aufweist, die verschiedene Wicklungsdrahtdurchmesser haben.

2. Maschinenkomponente (4) nach Anspruch 1, wobei die Windungszahlen von mindestens zwei der Einzelspulen (43) identisch sind.

3. Maschinenkomponente (4) nach Anspruch 1 oder 2, wobei die Windungen der Einzelspulen (43) nebeneinander oder lagenweise, insbesondere in wechselnden Lagen der Windungen der Einzelspulen (43), in den Nuten (44) angeordnet sind.

4. Maschinenkomponente (4) nach Anspruch 1 oder 2, wobei Spulenseiten der Einzelspulen (43) nebeneinander in den Nuten (44) angeordnet sind.

5. Gleichstrommaschine (1) mit einem Rotor (4) als eine Maschinenkomponente nach einem der Ansprüche 1 bis 4.

6. Gleichstrommaschine (1) nach Anspruch 5, wobei zwei Anschlüsse jeder der Einzelspulen (43) mit zwei Kommutatorlamellen (61) eines Kommutators (6) elektrisch verbunden sind, so dass die Einzelspulen (43) über die Kommutatorlamellen (61) parallel geschaltet sind.

7. Verfahren zum Herstellen einer Maschinenkomponente (3) mit mindestens einer Wicklungsspule (42) mit mehreren zueinander parallel geschalteten Einzelspulen (43), umfassend die folgenden Schritte:

   - Vorgeben eines Komponentenkörpers, insbesondere eines Rotorkörpers (5);
   - Vorgeben einer effektiven Querschnittsfläche einer Wicklungsspule (42) des Rotorkörpers (5); und
   - Auswählen von Wicklungsdrähten mit verschiedenen Wicklungsdrahtdurchmessern aus einer Menge von Wicklungsdrähten mit verschiedenen Wicklungsdrahtdurchmessern,

   wobei mindestens ein erster Wicklungsdraht mit einem ersten Wicklungsdrahtdurchmesser zum Wickeln einer ersten der Einzelspulen (43) ausgewählt wird, wobei bei Vorsehen aller Wicklungsdrähte der Einzelspulen (43) mit dem ersten Wicklungsdrahtdurchmesser eine erste effektive Querschnittsfläche erreicht würde, die geringer ist als die vorgegebene effektive Querschnittsfläche,

   wobei mindestens ein zweiter Wicklungsdraht mit einem zweiten Wicklungsdrahtdurchmesser zum Wickeln einer zweiten der Einzelspulen (43) ausgewählt wird, wobei bei Vorsehen aller Wicklungsdrähte der Einzelspulen (43) mit dem zweiten Wicklungsdrahtdurchmesser eine zweite effektive Querschnittsfläche erreicht würde, die größer ist als die vorgegebene effektive Querschnittsfläche.

8. Verfahren nach Anspruch 7, wobei in der Menge von Wicklungsdrähten keine Wicklungsdrähte vorhanden sind, deren Wicklungsdrahtdurchmesser zwischen dem ersten und dem zweiten Wicklungsdrahtdurchmesser liegen.

9. Verfahren nach Anspruch 7 oder 8, wobei durch das Auswählen von Wicklungsdrähten mit verschiedenen Wicklungsdrahtdurchmessern eine effektive Querschnittsfläche der Wicklungsspule (42) erreicht wird, die einen Abstand von der ersten und der zweiten effektiven Querschnittsfläche von zwischen 30 und 70 % des Unterschieds zwischen der ersten und der zweiten effektiven Querschnittsfläche aufweist.

FIG. 1

FIG. 2

Start

S1

S2

S3

Stop

FIG. 3

Europäisches
Patentamt

European
Patent Office

Office européen
des brevets

## EUROPÄISCHER RECHERCHENBERICHT

Nummer der Anmeldung

EP 14 18 1955

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 37 23 369 C1 (DAIMLER BENZ AG) 24. November 1988 (1988-11-24) * Spalte 2, Zeile 28 - Spalte 3, Zeile 41; Ansprüche 1,2; Abbildung 4 * ----- | 1-5,7-9 | INV. H02K23/36 H02K15/09 |
| X | DE 10 2010 064323 A1 (BOSCH GMBH ROBERT [DE]) 5. Juli 2012 (2012-07-05) * Absätze [0012], [0027] - Absatz [0030]; Abbildungen 1,2,5 * ----- | 1,3,5,6 | |
| A | WO 03/081754 A1 (BOSCH GMBH ROBERT [DE]; WEHRLE ANDREAS [DE]) 2. Oktober 2003 (2003-10-02) * Seite 11, Zeile 22 - Seite 12, Zeile 24; Ansprüche 1,7,8,11,14,16 * ----- | 7-9 | |
| A | EP 2 278 692 A2 (DUNKERMOTOREN GMBH [DE]) 26. Januar 2011 (2011-01-26) * Absatz [0026]; Ansprüche 1,2,7,8 * ----- | 1-6 | |

RECHERCHIERTE
SACHGEBIETE (IPC)

H02K

Der vorliegende Recherchenbericht wurde für alle Patentansprüche erstellt

| Recherchenort | Abschlußdatum der Recherche | Prüfer |
|---|---|---|
| München | 21. Januar 2015 | Sedlmeyer, Rafael |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 18 1955

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-01-2015

| Im Recherchenbericht angeführtes Patentdokument | Datum der Veröffentlichung | Mitglied(er) der Patentfamilie | Datum der Veröffentlichung |
|---|---|---|---|
| DE 3723369 C1 | 24-11-1988 | KEINE | |
| DE 102010064323 A1 | 05-07-2012 | CN 102545442 A<br>DE 102010064323 A1<br>FR 2970824 A1 | 04-07-2012<br>05-07-2012<br>27-07-2012 |
| WO 03081754 A1 | 02-10-2003 | CN 1596497 A<br>DE 10213383 A1<br>KR 20040088025 A<br>WO 03081754 A1 | 16-03-2005<br>16-10-2003<br>15-10-2004<br>02-10-2003 |
| EP 2278692 A2 | 26-01-2011 | DE 102009034136 A1<br>EP 2278692 A2 | 27-01-2011<br>26-01-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 27893 A

- DE 102005035411 A1